# EUROPÄISCHE PATENTSCHRIFT

(11) **EP 1 994 685 B1**
(45) Veröffentlichungstag und Bekanntmachung des Hinweises auf die Patenterteilung: **02.02.2011**
(21) Anmeldenummer: 07711698.6
(22) Anmeldetag: 27.02.2007
(51) Int. Cl.: H04L 12/28, H04L 12/56

(54) **VERFAHREN ZUR MULTI-HOP-DATENÜBERTRAGUNG IN EINEM AD-HOC- NETZ MIT VERSTECKTEN KNOTEN**
METHOD FOR MULTI-HOP DATA TRANSMISSION IN AN AD-HOC NETWORK COMPRISING CONCEALED NODES
PROCÉDÉ DE TRANSMISSION DE DONNÉES À PLUSIEURS BONDS DANS UN RÉSEAU AD HOC PRÉSENTANT DES NOEUDS CACHÉS

(30) Priorität: 10.03.2006 DE 102006011259; 28.03.2006 DE 102006014308
(43) Veröffentlichungstag der Anmeldung: 26.11.2008
(73) Patentinhaber: Rohde & Schwarz GmbH & Co. KG, 81671 München (DE)
(72) Erfinder: LANGGUTH, Torsten, 82008 Unterhaching (DE); SCHOBER, Henrik, 85457 Wörth (DE); NICOLAY, Thomas, Dr., 85622 Feldkirchen (DE)
(74) Vertreter: Körfer, Thomas
(86) Internationale Anmeldenummer: PCT/EP2007/001682
(87) Internationale Veröffentlichungsnummer: WO 2007/104424

(56) Entgegenhaltungen:
- EP-A- 1 509 006
- WO-A-03/088587
- US-A- 5 661 727
- US-A1- 2004 240 426
- US-A1- 2006 045 117

## Beschreibung

Die Erfindung betrifft ein Verfahren zur Multi-Hop-Datenübertragung in einem ad-hoc-Netz mit versteckten Knoten.

Ein mobiles ad-hoc-Netz (MANET) besteht aus einer Menge von Funkgeräten, die dynamisch ein temporäres Netz bilden, in dem jedes Funkgerät als Router für die jeweils anderen Funkgeräte dient und somit keine zentrale Infrastruktur benötigt wird.

Ein wichtiger Punkt bei MANETs ist die Koordination des Zugriffs auf die gemeinsam genutzte Übertragungsressource. Es darf jeweils nur ein Gerät senden, da sonst Kollisionen auftreten, die zum Verlust der gesendeten Informationen führen.

Ein Medium-Access-Control (MAC)-Protokoll koordiniert den Zugriff und definiert, wie die Funkgeräte die begrenzte Übertragungsressource effizient und fair teilen können. Gerade im ad-hoc-Bereich sind MAC-Verfahren sehr weit verbreitet, die die Koordination des Kanalzugriffs auf der Basis von Informationen über die Kanalbelegung vornehmen. Solche Verfahren werden unter dem Begriff Carrier-Sensing-Multiple-Access (CSMA) zusammengefaßt. Ein weit verbreitetes WLAN-Verfahren IEEE 802.11 basiert auf CSMA.

Bei CSMA-Verfahren überwachen alle sendewilligen Stationen das Medium. Wenn das Medium bereits belegt ist, warten die sendewilligen Stationen. Wenn das Medium nicht belegt ist, dürfen sendewillige Stationen das Medium belegen und senden. Zur Vermeidung von Kollisionen am Ende einer Übertragung kann der Kanalzugriff durch eine zufällige Wartezeit gesteuert werden. Verschiedene Stationen haben am Ende einer Übertragung unterschiedliche Wartezeiten, so dass eine Station das Medium zuerst belegt. Die anderen Stationen erkennen dies durch die Kanalüberwachung und treten vom Sendewunsch bis zum Ende der aktuellen Übertragung zurück. Das Medium wird als belegt betrachtet, wenn die empfangene Signalstärke über einem bestimmten Schwellenwert liegt.

MANETs haben dynamische, manchmal eine sich schnell ändernde, zufällige Topologie. Die Funkgeräte kommunizieren direkt mit ihrem benachbarten Funkgeräten (benachbarte Knoten), wenn diese innerhalb der Reichweite sind oder über mehrere Zwischenknoten dienende Funkgeräte (Multi-Hop), die die Informationen an den Ziel-Funkgerät (Zielknoten) weiterleiten. Aufgrund der dezentralen Struktur sind solche Netze sehr robust, erfordern jedoch eine eigenständige Kontrolle und Koordination durch die einzelnen Netzknoten.

Für einen Multi-Hop-Betrieb hält jeder Funkknoten eine Routing-Tabelle mit der Topologie aller beteiligter Funkknoten vor. Diese Routing-Tabellen wird mittels Datenaustausch mit den benachbarten Funkknoten beim proaktiven Routing in einem bestimmten Zeitraster und bei reaktiven Routing nur zu den Zeitpunkten des Nutzdatenaustauschs mit den benachbarten Funkknoten aktualisiert. Findet der Quellknoten den Zielknoten in der Routing-Tabelle, so wird das zu übertragende Datenpaket vom sendewilligen Funkknoten über den Routing-Pfad aller bekannten Zwischenknoten zum Zielknoten übertragen.

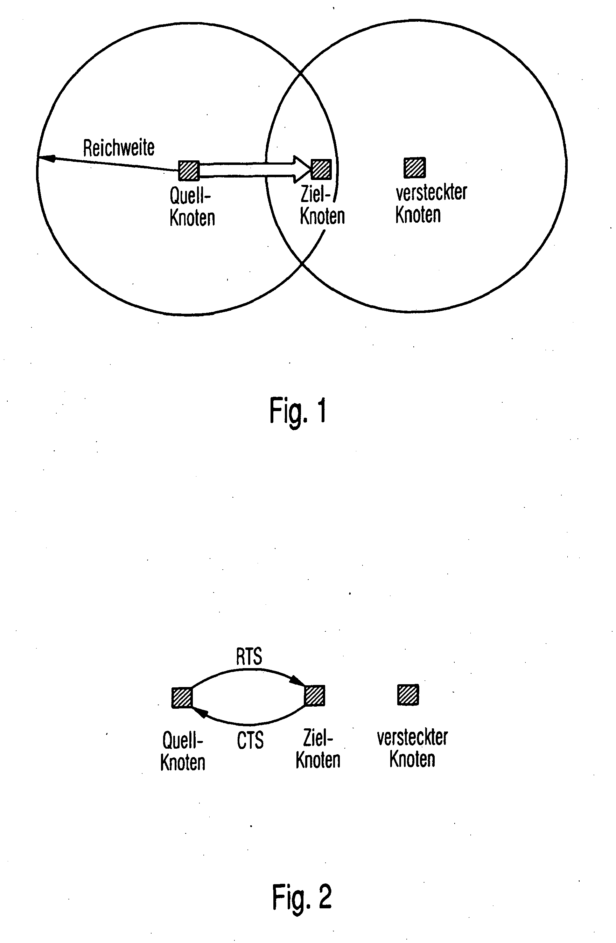

Zu einer Netzblockade kann es kommen, wenn gemäß Fig. 1 zwei Knoten, in deren Reichweite der jeweils andere Knoten nicht enthalten ist, einen identischen Knoten aufweisen, der innerhalb ihrer Reichweite liegt. Beabsichtigen die beiden Knoten mit ihrem identischen Knoten zur selben Zeit zu kommunizieren, so kollidieren ihre jeweiligen Signale, das durch das CSMA-Verfahren aufgrund fehlender Koordination der beiden Knoten nicht verhindert werden kann. Die Leistungsfähigkeit des mobilen ad-hoc-Netzes wird durch eine derartige Netzblockade reduziert. Da die beiden sendenden Knoten jeweils außerhalb der Reichweite des anderen Knotens liegen, stellen sie jeweils versteckte Knoten für den jeweils anderen Knoten dar.

Die Identifizierung derartiger versteckter Knoten in einem MANET stellt deshalb eine wichtige Maßnahme zur Steigerung der Leistungsfähigkeit des mobilen ad-hoc-Netzes dar.

Zur Vermeidung von Kollisionen der versteckten Knoten wird häufig das RTS-CTS-Verfahren gemäß Fig. 2 verwendet. Dabei überträgt ein Sender zuerst eine kurze Nachricht (RTS), mit der die Übertragung bekannt gemacht wird. Der Empfänger antwortet ebenfalls mit einer kurzen Nachricht (CTS). Danach erfolgt die eigentliche Nutzdaten-übertragung. Durch die RTS- und CTS-Nachrichten werden alle Stationen in der Reichweite des Senders und Empfängers über die Übertragung informiert. Die anderen Stationen dürfen während der Übertragung selbst nicht senden, um Kollisionen zu vermeiden.

Die Übertragung der RTS- und CTS-Nachrichten verbraucht Übertragungskapazität, die für die Übertragung von Nutzdaten-Paketen nicht zur Verfügung steht. Besonders bei der Übertragung von kleinen Nutzdaten-Paketen wirkt sich die Übertragung von RTS- und CTS-Nachrichten signifikant negativ aus. Insofern wird das RTS-CTS-Verfahren erst ab einer bestimmten Nutzdatenpaketgröße eingesetzt.

Aus der WO 03/079708 A1 geht ein Verfahren zur Identifizierung eines versteckten Knotens hervor. Hierbei wird von einem sendewilligen Knoten eine Kontrollnachricht an einen benachbarten Knoten, in dessen Umgebung sich ein für den sendewilligen Knoten versteckter Knoten befindet, gesendet und schließlich vom benachbarten Knoten an den versteckten Knoten weitergereicht, der über den benachbarten Knoten eine Quittierungsnachricht an den sendewilligen Knoten zurücksendet. Diese Quittierungsnachricht dient dem sendewilligen Knoten als Indikator für die Existenz eines in der Umgebung des benachbarten Knotens befindlichen versteckten Knotens.

Aufgabe der Erfindung ist es, ein Verfahren zur Multi-Hop-Datenübertragung in einem ad-hoc-Netz mit versteckten Knoten zu schaffen, das Kollisionen mit Nutzdaten-Paketen von versteckten Knoten vermeidet und gleichzeitig die Effizienz des Übertragungskanals verbessert.

Die Aufgabe wird durch den Gegenstand des erfindungsgemäßen Verfahrens zur Multi-Hop-Datenübertragung in einem ad-hoc-Netz mit versteckten Knoten mit den Merkmalen des Anspruchs 1 gelöst. Vorteilhafte Weiterbildungen sind in den Unteransprüchen angegeben.

Erfindungsgemäß wird im Falle einer Datenübertragungsabsicht eines Knotens im ad-hoc-Netz von diesem die Wahrscheinlichkeit einer kollisionsfreien Datenübertragung ermittelt und im Fall einer hohen Wahrscheinlichkeit einer kollisionsfreien Übertragung die Datenübertragung durchgeführt, ohne einen Abstimmungsprozeß über die Übertragungskanalzuweisung mit den in der Umgebung des nächsten Knotens befindlichen versteckten Knoten durchzuführen.

Lediglich im Fall einer geringen Wahrscheinlichkeit einer kollisionsfreien Übertragung wird ein Abstimmungsprozeß über die Übertragungskanalzuweisung mit den in der Umgebung des nächsten Knoten befindlichen versteckten Knoten, beispielsweise über ein RTS-CTS-Verfahren, durchgeführt.

Auf diese Weise wird der Übertragungskanal mit einer minimierten Anzahl von Abstimmungsprozessen zwischen sendewilligen Knoten und den in der Umgebung des nächsten Knoten befindlichen versteckten Knoten im Vergleich zu Verfahren des Stand der Technik belegt, woraus eine höhere Effizienz des Übertragungskanals resultiert.

Zur Ermittelung der Wahrscheinlichkeit einer kollisionsfreien Übertragung ermittelt der sendewillige
In der EP 1 509 006 A1 wird ein Verfahren zur Multi-Hop-Datenübertragung mit versteckten Knoten offenbart, das Kollisionen mit Nutzdatenpaketen von versteckten Knoten vermeidet, das durch Ermittlung eines Kollisionsraten-Parameters die Wahrscheinlichkeit für eine kollisionsfreie Datenübertragung bestimmt. Liegt der Wert des ermittelten Kollisionsraten-Parameters unterhalb eines bestimmten Schwellwerts so wird ein andernfalls durchzuführender Kollisionsabstimmungsprozess über einen Request-To-Send/Clear-To-Send(RTS/CTS)-Mechanismus mit dem nächsten Knoten deaktiviert. Knoten die Anzahl von versteckten Knoten, die in der Umgebung des im Routing-Pfad seiner Datenübertragung nächst gelegenen Knoten liegt. Hierzu kann er entsprechend der WO 03/088587 A1 vorab die für das Routing mit seinen benachbarten Knoten ausgetauschten Routing-Informationen auswerten, ohne zusätzliche Übertragungskapazität für die Identifizierung von versteckten Knoten zu verschwenden.

Je höher die Anzahl von identifizierten versteckten Knoten in der Umgebung des nächsten Knotens im Routing-Pfad ist, desto höher ist die Wahrscheinlichkeit von auftretenden Kollisionen. Zusätzlich kann zur Ermittlung der Wahrscheinlichkeit einer kollisionsfreien Übertragung das durchschnittliche Übertragungsvolumen zwischen dem nächsten Knoten und jedem in seiner Umgebung befindlichen versteckten Knoten vom sendewilligen Knoten bestimmt werden. Hierzu wird die Paketgröße, der Datentyp und/oder die Dienstklasse jedes zwischen dem nächsten Knoten und den in seiner Umgebung befindlichen versteckten Knoten übertragenen Nutzdaten-Pakets erfasst und statistisch ausgewertet.

Eine Auswertung des durchschnittlichen Übertragungsvolumens zwischen dem nächsten Knoten und jedem in seiner Umgebung befindlichen versteckten Knotens über der Zeit ermöglicht insbesondere bei periodischen Datenübertragungsverhalten die Identifizierung von Zeiten mit einer hohen Wahrscheinlichkeit für eine kollisionsfreie Datenübertragung.

Das erfindungsgemäße Verfahren zur Multi-Hop-Datenübertragung in einem ad-hoc-Netz mit versteckten Knoten wird im folgenden anhand der Zeichnung im Detail erläutert. Die Figuren der Zeichnung zeigen:
- Fig. 1: eine Darstellung der räumlichen Verteilung von sendenden, benachbarten und versteckten Knoten,
- Fig. 2: eine Darstellung des Datenaustauschs in einem RTS-CTS-Verfahren,
- Fig. 3: ein Flußdiagramm des erfindungsgemäßen Verfahrens zur Multi-Hop-Dätenübertragung in einem ad-hoc-Netz mit versteckten Knoten,
- Fig. 4: ein Zeitdiagramm einer typischen Belegung des Übertragungskanals in einem ad-hoc-Netz und
- Fig. 5: ein Blockschaltbild des erfindungsgemäßen Systems zur Multi-Hop-Datenübertragung in einem ad-hoc-Netz mit versteckten Knoten.

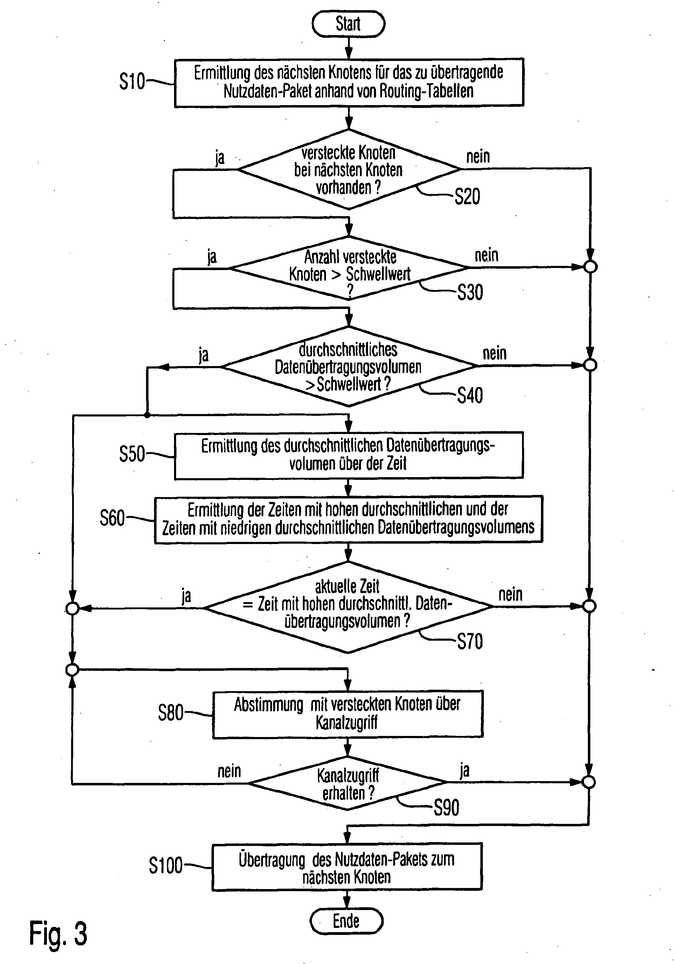

Im folgenden wird das erfindungsgemäße Verfahren zur Multi-Hop-Datenübertragung in einem ad-hoc-Netz mit versteckten Knoten anhand der Fig. 3 im Detail erläutert.

Im ersten Verfahrensschritt S10 wird von einem Knoten im ad-hoc-Netz, der ein zu übertragendes Nutzdaten-Paket an einen Zielknoten zu senden hat, im Rahmen eines Routing-Verfahrens aus vorhandenen Routing-Tabellen der nächste Knoten im ad-hoc-Netz ermittelt. Hierzu kommen Routing-Verfahren nach dem Stand der Technik zur Anwendung.

Im Folgenden wird unter Quellknoten derjenige Knoten verstanden, bei welchem das Datenpaket aktuell vorliegt, während unter Zielknoten derjenige Knoten verstanden wird, dem der Quellknoten das Datenpaket zusendet.

Im nächsten Verfahrensschritt S20 ermittelt der Knoten mit Sendeabsicht anhand eines Verfahrens zur Identifizierung von versteckten Knoten in einem ad-hoc-Netz nach dem Stand der Technik, beispielsweise nach dem in der WO 03/088578 A1 beschriebenen Verfahren, in der Umgebung des nächsten Knotens befindliche versteckte Knoten. Wird durch dieses Verfahren kein versteckter Knoten in der Umgebung des nächsten Knotens identifiziert, so ist mit keiner Kollision im Falle einer Übertragung des zu sendenden Nutzdaten-Pakets durch den Knoten mit Sendeabsicht zu rechnen und der Knoten mit Sendeabsicht kann gemäß Verfahrensschritt S100 das Nutzdaten-Paket an den nächsten Knoten ohne auftretende Probleme übertragen.

Wird dagegen durch dieses Verfahren mindestens ein versteckter Knoten in der Umgebung des nächsten Knotens identifiziert, so wird im nächsten Verfahrensschritt S30 ermittelt, ob die Anzahl der identifizierten versteckten Knoten einen vorgegebenen Schwellwert überschreiten. Liegt die Anzahl der identifizierten versteckten Knoten unterhalb des Schwellwertes, so kann von einer hohen Wahrscheinlichkeit für eine kollisionsfreie Datenübertragung im Falle einer Übertragung des zu sendenden Nutzdaten-Pakets durch den Knoten mit Sendeabsicht ausgegangen werden und der sendewillige Knoten überträgt gemäß Verfahrensschritt S100 das Nutzdaten-Paket mit einem vergleichsweise geringen Risiko auftretender Probleme an den nächsten Knoten.

Liegt dagegen die Anzahl der identifizierten versteckten Knoten oberhalb des Schwellwertes, so kann optional im darauffolgenden Verfahrensschritt S40 über einen längeren Zeitraum durch Erfassung und statistische Auswertung der zwischen dem nächsten Knoten und jedes in der Umgebung des nächsten Knoten befindlichen versteckten Knotens übertragenen Nutzdaten-Pakete das durchschnittliche Datenübertragungsvolumen zwischen dem nächsten Knoten und den in seiner Umgebung befindlichen versteckten Knoten ermittelt werden. Für die Bestimmung des durchschnittlichen Datenübertragungsvolumen können als Kenngrössen beispielsweise die Paketgröße, der Datentyp und/oder die Dienstklasse der jeweils zwischen dem nächsten Knoten und den in der Umgebung des nächsten Knotens befindlichen versteckten Knoten übertragenen Nutzdaten-Pakete herangezogen werden.

Liegt dieses durchschnittliche Datenübertragungsvolumen unterhalb eines vorgegebenen Schwellwertes, so kann trotz Existenz einer Mindestanzahl von in der Umgebung des nächsten Knotens befindlichen versteckten Knoten von einer hohen Wahrscheinlichkeit für eine kollisionsfreie Datenübertragung ausgegangen werden. In diesem Fall kann der sendewillige Knoten in Verfahrensschritt S100 das übertragenen Nutzdaten-Paket mit einem vergleichsweise geringen Risiko auftretender Probleme an den nächsten Knoten senden.

Liegt der Anzahl der identifizierten versteckten Knoten gemäß Verfahrensschritt S30 über einem vorgegebenen Schwellwert und/oder überschreitet das durchschnittliche Datenübertragungsvolumen in Verfahrensschritt S40 einen Schwellwert, so kann optional in Verfahrensschritt S50 der zeitliche Verlauf des durchschnittlichen Datenübertragungsvolumens zwischen dem nächsten Knoten und jedem in der Umgebung des nächsten Knotens befindlichen versteckten Knotens erfasst werden. Bei periodisch anfallenden Datenübertragungsverkehr zwischen dem nächsten Knoten und den in der Umgebung des nächsten Knoten befindlichen versteckten Knoten können nämlich Zeiten mit niedrigeren durchschnittlichen Datenübertragungsvolumen und damit einer hohen Wahrscheinlichkeit für eine kollisionsfreie Datenübertragung und Zeiten mit höherem durchschnittlichen Datenübertragungsvolumen und damit einer niedrigen Wahrscheinlichkeit für eine kollisionsfreie Datenübertragung vorliegen.

In einem darauf folgenden ebenfalls optional durchzuführenden Verfahrensschritt S60 werden deshalb aus diesem optional ermittelten zeitlichen Verlauf des durchschnittlichen Datenübertragungsvolumens diejenigen Zeitabschnitte, in denen ein hohes durchschnittliches Datenübertragungsvolumen vorliegt, und diejenigen Zeitabschnitte ermittelt, in denen ein niedriges durchschnittliches Datenübertragungsvolumen vorliegt. Schließlich wird in einem nächsten ebenfalls optional durchzuführenden Verfahrensschritt S70 festgestellt, ob im aktuellen Zeitpunkt ein Zeitabschnitt mit hohem durchschnittlichen Datenübertragungsvolumen vorliegt. Liegt aktuell kein Zeitabschnitt mit einem hohen durchschnittlichen Datenübertragungsvolumen vor, so ist aktuell die Wahrscheinlichkeit für eine kollisionsfreie Datenübertragung vergleichsweise hoch und der sendewillige Knoten wird in Verfahrensschritt S100 das Nutzdaten-Paket zum nächsten Knoten übertragen.

Liegt aktuell dagegen ein Zeitabschnitt mit einer hohen durchschnittlichen Datenübertragungsrate vor, so ist aktuell die Wahrscheinlichkeit für eine kollisionsfreie Datenübertragung gering und der sendewillige Knoten wird sich wie auch im Fall einer über dem vorgegebenen Schwellwert liegenden Anzahl identifizierter versteckter Knoten gemäß Verfahrensschritt S30 und/oder eines über einem vorgegebenen Schwellwert liegenden durchschnittlichen Datenübertragungsvolumens gemäß Verfahrensschritt S40 ohne Durchführung der optionalen Verfahrensschritte S50 bis S70 im nächsten Verfahrensschritt S80 mit dem in der Umgebung des nächsten Knotens befindlichen versteckten Knoten über den nächsten Kanalzugriff abstimmen. Hierbei kann das oben erwähnte RTS-CTS-Verfahren unter Zwischenschaltung des nächsten Knotens, aber durchaus auch andere Verfahren der Übertragungskanalzuweisung in einem CSMA-System zum Einsatz kommen.

Wird dem sendewilligen Knoten schließlich der Übertragungskanal zugewiesen, so erfolgt durch den sendewilligen Knoten die Übertragung des zu sendenden Nutzdaten-Pakets an den nächsten Knoten in Verfahrensschritt S100.

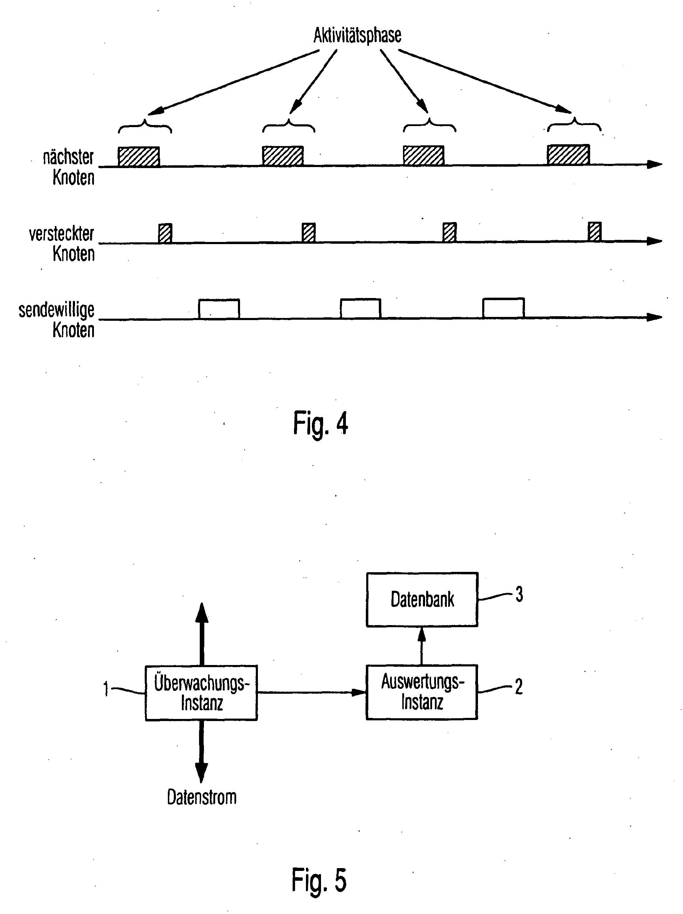

Im Zeitdiagramm der Fig. 4 ist die Belegung des Übertragungskanals in einem ad-hoc-Netz bei periodisch auftretenden Datenübertragungsvolumen zwischen dem nächsten Knoten und einem in dessen Umgebung befindlichen verstecktem Knoten dargestellt. Zu erkennen sind die periodisch auftretenden Zeitabschnitte mit hohem durchschnittlichen Datenübertragungsvolumen (mit Schraffur) und die daraus resultierenden Zeitabschnitte mit niedrigen durchschnittlichen Datenübertragungsvolumen, in denen der sendewillige Knoten die zu übertragenden Nutzdaten-Pakete an den nächsten Knoten senden kann (ohne Schraffur).

In Fig. 5 ist ein Blockschaltbild des erfindungsgemäßen Systems zur Multi-Hop-Datenübertragung in einem ad-hoc-Netz mit versteckten Knoten, das in jedem Knoten des ad-hoc-Netzes implementiert ist, dargestellt.

Das erfindungsgemäße System besteht aus einer Überwachungsinstanz 1, das alle empfangenen Nutzdaten-Pakete hinsichtlich der für das erfindungsgemäße Verfahren relevanten Informationen - MAC-Zieladresse, MAC-Quelladresse, Paketgröße, Datentyp, Dienstklasse, Absendezeit. usw. - analysiert und extrahiert. Die Überwachungsinstanz 1, die bevorzugt in der Netzwerk-Schicht realisiert ist, kann die Extrahierung der relevanten Daten des empfangenen Nutzdaten-Pakets entweder getrennt für eine einzige Schicht, bevorzugt die Netzwerk-Schicht, und die in dieser Schicht aus dem Nutzdaten-Paket zu extrahierenden relevanten Daten oder alternativ gebunden für alle Schichten des Knotens und die in allen Schichten des Knotens aus dem Nutzdaten-Paket zu extrahierenden relevanten Daten durchführen.

Die extrahierten Informationen des empfangenen Nutzdaten-Pakets werden von einer der Überwachungsinstanz 1 nachgeschalteten Auswertungsinstanz 2, die ebenfalls bevorzugt in der Netzwerk-Schicht implementiert ist, analysiert und ausgewertet (Schwellwertvergleich der Anzahl von identifizierten versteckten Knoten, Bestimmung des durchschnittlichen Datenübertragungsvolumens aus Paketgröße, Datentyp und/oder Dienstklasse, Schwellwertvergleich des durchschnittlichen Datenübertragungsvolumen, Identifizierung der Periodizität des Verlaufs des durchschnittlichen Datenübertragungsvolumen). Die augewerteten Informationen werden in Nachbarschaft zu den Routing-Tabellen und den in der Umgebung der einzelnen nächsten Knoten jeweils identifizierten versteckten Knoten in einer Datenbank 3 abgespeichert.

Die Erfindung ist nicht auf das dargestellte Ausführungsbeispiel beschränkt. Alle vorstehend beschriebenen Maßnahmen sind im Rahmen der Erfindung beliebig miteinander kombinierbar.

## Patentansprüche

1. Verfahren zur Multi-Hop-Datenübertragung in einem ad-hoc-Netz mit versteckten Knoten, indem ein Knoten mit Sendeabsicht die Wahrscheinlichkeit für eine kollisionsfreie Datenübertragung zum nächsten Knoten ermittelt und bei einer hohen Wahrscheinlichkeit für eine kollisionsfreie Datenübertragung ein Nutzdaten-Paket zum nächsten Knoten überträgt (S100), ohne sich über den nächsten Knoten mit in der Umgebung des nächsten Knotens befindlichen versteckten Knoten bezüglich der Datenübertragung zum nächsten Knoten abzustimmen,
wobei die Wahrscheinlichkeit für eine kollisionsfreie Datenübertragung zum nächsten Knoten bei einer unterhalb eines Schwellwerts liegenden Anzahl von in der Umgebung des nächsten Knotens identifizierten versteckten Knoten (S30) oder bei einem unterhalb eines Schwellwerts liegenden durchschnittlichen Datenübertragungsvolumen zwischen dem nächsten Knoten und jedem der in der Umgebung des nächsten Knoten identifizierten versteckten Knoten (S40) hoch bewertet wird.

2. Verfahren zur Multi-Hop-Datenübertragung nach Anspruch 1,
**dadurch gekennzeichnet,**
**dass** Zeiten mit einer geringen Wahrscheinlichkeit für eine kollisionsfreie Datenübertragung zum nächsten Knoten als Zeiten mit einem kleinen durchschnittlichen Datenübertragungsvolumen zwischen nächsten Knoten und jedem in der Umgebung des nächsten Knoten identifizierten versteckten Knoten ermittelt werden (S60).

3. Verfahren zur Multi-Hop-Datenübertragung nach Anspruch 1 oder 2,
**dadurch gekennzeichnet,**
**dass** zur Ermittlung des durchschnittlichen Datenübertragungsvolumens zwischen nächstem Knoten und jedem einzelnen der in der Umgebung des nächsten Knoten identifizierten versteckten Knoten die Paketgröße, der Datentyp und/oder die Dienstklasse jedes zwischen nächstem Knoten und jedem der in der Umgebung des nächsten Knotens identifizierten versteckten Knoten übertragenen Nutzdaten-Pakete erfaßt und statistisch ausgewertet wird.

4. Verfahren zur Multi-Hop-Datenübertragung nach einem der Ansprüche 1 bis 3,
**dadurch gekennzeichnet,**
**dass** der Knoten mit Sendeabsicht sich bei einem hohen durchschnittlichen Datenübertragungsvolumen, in Zeiten mit hohen durchschnittlichen Datenübertragungsvolumen und/oder einer großen Anzahl von in der Umgebung des nächsten Knotens identifizierten versteckten Knoten mit den in der Umgebung des nächsten Knotens befindlichen versteckten Knoten über den nächsten Knoten bezüglich der Datenübertragung zum nächsten Knoten abstimmt (S80).

5. Verfahren zur Multi-Hop-Datenübertragung nach Anspruch 4,
**dadurch gekennzeichnet,**
**dass** die Abstimmung zwischen dem Knoten mit Sendeabsicht und den in der Umgebung des nächsten Knotens befindlichen versteckten Knoten über das RTS-/CTS-Verfahren erfolgt.

## Claims

1. Method for multi-hop data transmission in an ad-hoc network with concealed nodes, wherein a node which wishes to transmit determines the probability of a collision-free data transmission to the next node and, in the case of a high probability of a collision-free data transmission, transmits a user-data packet to the next node (S100) without co-ordinating via the next node with concealed nodes disposed in the vicinity of the next node regarding the data transmission to the next node,
wherein the probability of a collision-free data transmission to the next node with a number of concealed nodes identified in the vicinity of the next node disposed below a threshold value (S30) or with an average data transmission value between the next node and every concealed node identified in the vicinity of the next node disposed below a threshold value (S40) is evaluated as high.

2. Method for multi-hop data transmission according to claim 1,
**characterised in that**
times with a low probability for a collision-free data transmission to the next node are determined as times with a low average data-transmission volume between next nodes and every concealed node identified within the vicinity of the next node (S60).

3. Method for multi-hop data transmission according to claim 1 or 2,
**characterised in that**
the packet size, the data type and/or the service class of every user-data packet transmitted between the next node and every concealed node identified within the vicinity of the next node are registered and statistically evaluated in order to determine the average data-transmission volume between the next node and every individual concealed node identified in the vicinity of the next node.

4. Method for multi-hop data transmission according to any one of claims 1 to 3,
**characterised in that**,
in the case of a high average data-transmission volume, at times with high average data-transmission volume and/or with a large number of concealed nodes identified within the vicinity of the next node, the node wishing to transmit co-ordinates via the next node with the concealed nodes disposed in the vicinity of the next node regarding the data transmission to the next node (S80).

5. Method for multi-hop data transmission according to claim 4,
**characterised in that**
the co-ordination between the node wishing to transmit and the concealed nodes disposed within the vicinity of the next node is implemented via the RTS/CTS method.

## Revendications

1. Procédé de transmission de données à sauts multiples dans un réseau ad hoc comportant des noeuds cachés, dans lequel un noeud avec intention d'envoi détecta la probabilité d'une transmission de données exempte de collision vers le noeud suivant et transmet (S100), dans le cas d'une probabilité élevée pour une transmission de données exempte de collision, un paquet de données utiles vers le noeud suivant, sans s'accorder par l'intermédiaire du noeud suivant aux noeuds cachés se trouvant à proximité du noeud suivant par rapport à la transmission de données vers le noeud suivant, dans lequel la probabilité pour une transmission de données exempte de collision vers le noeud suivant est considérée comme élevée dans le cas d'un nombre de noeuds cachés identifiés à proximité du noeud suivant se trouvant en deçà d'une valeur de seuil (S30) ou dans le cas d'un volume de transmission de données moyen se trouvant en deçà de la valeur de seuil entre le noeud suivant et chacun des noeuds cachés identifiés à proximité du noeud suivant (S40).

2. Procédé de transmission de données à sauts multiples selon la revendication 1, **caractérise en ce que**
des temps avec une faible probabilité pour une transmission de données exempte de collision vers le noeud suivant sont détectés (S60) en tant que temps avec un faible volume de transmission de données moyen entre le noeud suivant et chacun des noeuds cachés identifiés à proximité du noeud suivant.

3. Procédé de transmission de données à sauts multiples selon la revendication 1 ou 2, **caractérise en ce que**
en vue de la détermination du volume de transmission de données moyen entre le noeud suivant et chaque noeud particulier parmi les noeuds cachés identifiés à proximité du noeud suivant, sont détectes et évalués statistiquement la grandeur du paquet, le type de données et/ou la classe de service de chaque paquet de données utiles transmis entre le noeud suivant et chacun des noeuds cachés identifiés à proximité du noeud suivant.

4. Procédé de transmission de données à sauts multiples selon l'une des revendications 1 à 3, **caractérisé en ce que**
le noeud avec intention d'envoi s'accorde (S80), dans le cas d'un volume de transmission de données moyen élevé, à des temps avec des volumes de transmission de données moyens élevés et/ou dans le cas d'un grand nombre de noeuds cachés identifiés à proximité du noeud suivant aux noeuds cachés se trouvant à proximité du noeud suivant par l'intermédiaire du noeud suivant en ce qui concerne la transmission de données vers le noeud suivant.

5. Procédé de transmission de données à sauts multiples selon la revendication 4, **caractérisé en ce que**
l'accord entre le noeud aven intention d'envoi et les noeuds cachés se trouvant à proximité du noeud suivant est effectuée par l'intermédiaire du procédé RTS/CTS.
